# EUROPÄISCHE PATENTSCHRIFT

(11) **EP 1 114 104 B1**
(45) Veröffentlichungstag und Bekanntmachung des Hinweises auf die Patenterteilung: **28.07.2004**
(21) Anmeldenummer: 99969426.8
(22) Anmeldetag: 08.09.1999
(51) Int. Cl.: C09C 1/00

(54) **REDUKTIONSPIGMENTE**
REDUCTION PIGMENTS
PIGMENTS DE REDUCTION

(30) Priorität: 19.09.1998 DE 19843014
(43) Veröffentlichungstag der Anmeldung: 11.07.2001
(73) Patentinhaber: MERCK PATENT GmbH, 64293 Darmstadt (DE)
(72) Erfinder: VOGT, Reiner, D-64289 Kranichstein (DE); NEUGEBAUER, Eva-Maria, D-64289 Darmstadt (DE); SCHOEN, Sabine, D-64287 Darmstadt (DE)
(86) Internationale Anmeldenummer: PCT/EP1999/006609
(87) Internationale Veröffentlichungsnummer: WO 2000/017277

(56) Entgegenhaltungen:
- EP-A- 0 601 761
- EP-A- 0 707 050
- EP-A- 0 959 109
- WO-A-93/19131
- WO-A-97/39065
- DATABASE WPI Section Ch, Week 199120 Derwent Publications Ltd., London, GB; Class G01, AN 1991-144003 XP002128568 & JP 03 079673 A (SHISEIDO CO LTD), 4. April 1991 (1991-04-04)

## Beschreibung

Die vorliegende Erfindung betrifft dünne, plättchenförmige Titandioxidreduktionspigmente auf der Basis von SiO₂-Plättchen, sowie deren Verwendung in Farben, Lacken, Kunststoffen, Druckfarben und in Glasuren für Keramiken und Gläser.

Die bekannten Titandioxidreduktionspigmente basieren auf der Verwendung von Glimmer oder Titandioxid-Plättchen als Basissubstrat. Das Titandioxid wird auf den beschichteten oder unbeschichteten Basissubstraten aufgefällt und nachfolgend zu den Titansuboxiden reduziert. Als Reduktionsmittel werden in der Regel gasförmige Reduktionsmittel wie Wasserstoff oder Ammoniak oder Metalle, wie z.B. Silizium oder Titan verwendet.

Aus der U.S. 4,948,631 ist ein Verfahren zur Herstellung besonders blaustichiger Perlglanzpigmente durch Reduktion von mit Titandioxid beschichteten Glimmerpigmenten mit Ammoniak bei Temperaturen von 750 bis 850 °C bekannt.

In der JP H4-20031 wird ein Verfahren zur Herstellung eines farbigen Glimmerpigments durch Mischen eines mit Titandioxid beschichteten Glimmerpigments mit Titan und Reduktion der erhaltenen Mischung im Vakuum bei 500 bis 1000 °C beschrieben.

Aus der DE-OS-196 18 562 ist ein Titandioxidreduktionspigment bekannt, das aus Titandioxid, Titansuboxiden und gegebenenfalls einem weiteren Metalldioxid oder Titanoxidnitrit besteht. Dieses Pigment wird erhalten durch Verfestigung einer wäßrigen Lösung einer thermisch hydrolysierbaren Titanverbindung auf einem endlosen Band, Ablösung der entstandenen Schicht, Beschichtung der erhaltenen Titandioxidplättchen im Naßverfahren mit weiterem Titandioxid, Trocknung und gegebenenfalls Kalzination und Behandlung in einer nicht oxidierenden Gasatmosphäre.

Nachteil der bekannten Pigmente ist jedoch, daß sie ein zu geringes Deckvermögen und/oder keinen Farbflop aufweisen.

Aufgabe der Erfindung ist es ein hochglänzendes plättchenförmiges Titandioxidreduktionspigment bereitzustellen, das oben beschriebene Nachteile nicht aufweist und sich durch ein hohes Deckvermögen und einen Farbflop auszeichnet.

Diese Aufgabe wird erfindungsgemäß gelöst durch ein plättchenförmiges Farbpigment auf Basis eines SiO₂-Plättchens, das mit Titandioxid, ein oder mehreren Titansuboxiden und gegebenenfalls mit mindestens einem weiteren Metalloxid, Nichtmetalloxid und/oder Titanoxinitriden beschichtet ist. Dabei ist die Konzentration des Titandioxids in der Beschichtung in der Nähe der Substratoberfläche maximal und nimmt zur Pigmentoberfläche hin allmählich ab, und die Konzentration des gegebenenfalls vorhandenen weiteren Metalloxids an der Pigmentoberfläche maximal und nimmt zur Substratoberfläche hin allmählich ab, wobei in der Überzugsschicht Mischphasen dieser Oxide vorliegen.

Die erfindungsgemäßen Titandioxidreduktionspigmente auf Basis von SiO₂-Plättchen zeichnen sich durch ihren Glanz, ihr hohes Deckvermögen und einen Farbflop aus.

Gegenstand der Erfindung sind somit dünne Titanreduktionspigmente auf Basis von SiO₂-Plättchen, die mit Titandioxid, Titansuboxiden und gegebenenfalls mindestens einem weiteren Metalloxid, Nichtmetalloxid und/oder Titanoxinitrid beschichtet sind.

Gegenstand der Erfindung ist ebenfalls die Verwendung der erfindungsgemäßen Pigmente in Farben, Druckfarben, Kunststoffen, Lacken, insbesondere im Autolack, und in Glasuren für Keramiken und Gläser.

Die erfindungsgemäßen Pigmente basieren auf SiO₂-Plättchen. Diese haben in der Regel eine Dicke zwischen 10 nm und 1000 nm, vorzugsweise zwischen 300 und 500 nm. Die Ausdehnung in den beiden anderen Dimensionen beträgt zwischen 2 und 200 µm und insbesondere zwischen 5 und 150 µm. Derartige Pigmente werden z.B. auf einem endlosen Band hergestellt und basieren auf einer plättchenförmigen Matrix wie in der WO 93/08237 beschrieben. Die SiO₂-Plättchen werden mit einer oder mehreren Metalloxidschichten versehen, wobei mindestens eine Schicht eine TiO₂-Schicht ist. Die TiO₂-Schicht ist 10 bis 1000 nm, vorzugsweise 40 bis 50 nm, dick.

Geeignete Metalloxide oder Metalloxidgemische auf den mit TiO₂ beschichteten SiO₂-Plättchen sind Zirkonoxid, Zinkoxid, Eisenoxid und/oder Chromoxid, sowie TiO₂/Fe₂O₃-Gemische. Die Beschichtung der SiO₂-Plättchen kann z.B. erfolgen wie in der WO 93/08237 (naßchemische Beschichtung) oder DE-OS-196 14 637 (CVD-Verfahren) beschrieben. Vorzugsweise erfolgt die Beschichtung der SiO₂-Plättchen naßchemisch.

Bei dem weiteren Metalloxid, das neben Titanoxid und Titansuboxiden im erfindungsgemäßen Pigment enthalten sein kann, kann es sich auch um das Oxidationsprodukt des eingesetzten Reduktionsmittels handeln. Hierbei handelt es sich insbesondere um die Oxide der Elemente Li, Na, K, Mg, Ca, Al, Si, Cr, Zr, Zn und Fe. Dieses Metalloxid ist in einer Konzentration von 2 bis 30 Gew.-%, vorzugsweise 2 bis 5 Gew.-%, bezogen auf die Titandioxidmenge im erfindungsgemäßen Pigment enthalten.

Als Reduktionsmittel werden gasförmige Reduktionsmittel, wie zum Beispiel Wasserstoff oder feste Reduktionsmittel in Form von Metallpulvern, Legierungen von Metallen, Metallboriden, Metallcarbiden oder Metallsiliziden eingesetzt. Bevorzugt werden Pulver der Metalle/Nichtmetalle wie Bor, Aluminium, Silizium, Zink oder Eisen und insbesondere Silizium oder Kombinationen daraus verwendet.

Übliche Reduktionsmittel wie die Alkalimetalle können in flüssiger oder gasförmiger Phase eingesetzt werden. Als weitere Reduktionsmittel sind Hydride wie LiH oder CaH₂ zu nennen. Weiterhin kommen auch Kombinationen dieser Reduktionsmittel untereinander in Frage.

Die mit TiO₂ und gegebenenfalls einem weiteren Metalloxid beschichteten SiO₂-Plättchen und das Reduktionsmittel werden in einem Verhältnis von 100:1 bis 5:1 gemischt. In einer besonderen Ausführungsform kann das erfindungsgemäße Pigment noch Ruß enthalten, der entweder direkt auf die plättchenförmigen Siliziumoxidpartikel aufgebracht oder zusammen mit dem Titandioxid im Naßverfahren auf die plättchenförmigen Siliziumdioxidpartikel aufgefällt wird. Einzelheiten werden in den deutschen Offenlegungsschriften DE 195 02 231, DE 42 22 372 und dem US-Patent U.S. 4,076,551 näher beschrieben.

Die Titandioxid beschichteten SiO₂-Plättchen werden mit den oben beschriebenen festen Reduktionsmitteln in einem Verhältnis von 100:1 bis 5:1 intensiv gemischt und bei Temperaturen von mehr als 600 °C, vorzugsweise im Bereich von 700 bis 1100 °C, für mehr als 10 Minuten, bevorzugt für 15 bis 60 Minuten, in einer nichtoxidierenden Atmosphäre behandelt.

Die Reduktionsreaktion wird in Gegenwart eines Halogenids, vorzugsweise eines Chlorids, beschleunigt. Insbesondere bevorzugt sind LiCl, NaCl, KCl, MgCl₂, CaCl₂, CuCl₂, CrCl₃, MnCl₂, FeCl₂, FeCl₃, CoCl₂, NiCl₂ oder CeCl₃. Die Reaktionstemperatur kann in Gegenwart von Chlorid, wie z.B. CaCl₂, um 150 bis 300 °C verringert werden. Vorzugsweise sollte das Chlorid wasserfrei sein. Die Halogenidmengen können von 0,1 bis 40 Gew.-%, bevorzugt 0,5 bis 10 Gew.-%, bezogen auf das mit TiO₂ überzogene SiO₂-Plättchen betragen.

Das erfindungsgemäße Pigment kann noch zusätzlich mit schwerlöslichen, fest haftenden anorganischen oder organischen Färbemitteln beschichtet werden. Bevorzugt werden Farblacke und insbesondere Aluminiumfarblacke verwendet. Dazu wird eine Aluminiumhydroxidschicht naßchemisch aufgefällt, die in einem zweiten Schritt mit einem Farblack verlackt wird. Das Verfahren ist aus der DE 24 29 762 und DE 29 28 287 bekannt.

Bevorzugt ist auch eine zusätzliche Beschichtung mit Komplexsalzpigmenten, insbesondere Cyanoferratkomplexen, wie z.B. Berliner Blau und Turnbulls Blau, wie sie in der EP 0 141 173 oder DE-PS 23 13 332 beschrieben wird.

Das erfindungsgemäße Pigment kann auch mit organischen Farbstoffen und insbesondere mit Phthalocyanin- oder Metallphthalocyaninund/oder Indanthrenfarbstoffen nach DE 40 09 567 beschichtet werden. Dazu wird eine Suspension des Pigmentes in einer Lösung des Farbstoffes hergestellt und diese dann mit einem Lösungsmittel zusammengebracht, in welchem der Farbstoff schwer löslich oder unlöslich ist.

Weiterhin können auch Metallchalkogenide bzw. Metallchalkogenidhydrate und Ruß für eine zusätzliche Beschichtung eingesetzt werden.

Die erfindungsgemäßen Farbpigmente werden hergestellt, indem man mit TiO₂ überzogene SiO₂-Plättchen mit mindestens einem festen Reduktionsmittel, bevorzugt einem Erdalkalimetall, B, Al, Si, Zn, Fe, LiH, CaH₂, Al₄C₃, Mg₂Si, MgSi₂, Ca₂Si oder CaSi₂, mischt und die Mischung in einer nichtoxidierenden Gasatmosphäre länger als10 Minuten auf eine Temperatur von über 600 °C calciniert. Bei der Herstellung der erfindungsgemäßen Reduktionspigmente wird häufig dem Gemisch aus Pigment und Reduktionsmittel Talkum in Mengen von 0,1 bis 10 Gew.-%, insbesondere von 0,1 bis 2,0 Gew.-%, zugesetzt, was zu einer Verbesserung der Rieselfähigkeit der reduzierten Pigmente führt.

Die Reduktionsreaktion erfolgt in einer nichtoxidierenden Gasatmosphäre, wie z.B. N₂, Ar, He, CO₂, CₓH_{y}, H₂, NH₃ wobei N₂ oder Ar bevorzugt sind. Weiterhin bevorzugt sind Wasserstoff-Stickstoff-Gemische mit einem Wasserstoffanteil von vorzugsweise 3 Vol.-%. Im Fall von N₂ oder NH₃ können neben TiO₂₋ₓ auch TiN oder TiON entstehen. Dabei werden bei Temperaturen von ≥ 800 °C über einen Zeitraum von mehr als 10 Minuten, bevorzugt 15 Minuten bis 60 Minuten, auf den SiO₂-Plättchen feste Mischsuboxide oder Oxidbronzen in Form von weichen, festen Pulvern gebildet. Die Reaktion wird anhand von einigen Beispielen erläutert:

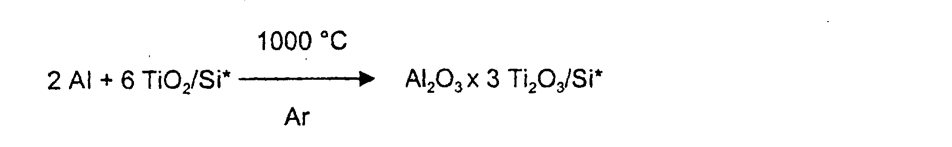

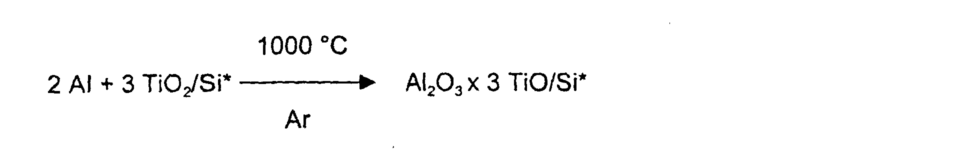

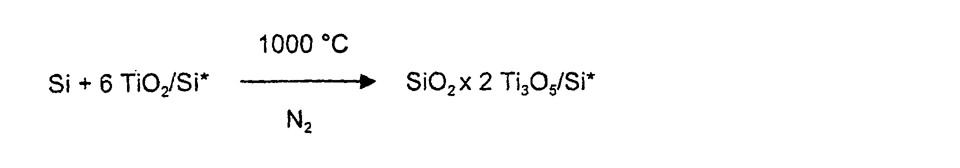

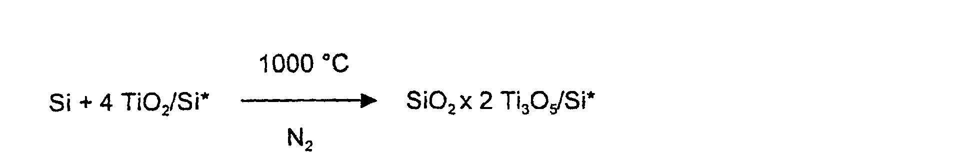

Si* = SiO₂-Plättchen

Der Farbeffekt der Pigmente läßt sich in der Regel einstellen durch Veränderung
- der Teilchengröße des SiO₂-Plättchens (kleinere Teilchen führen zu einem weichen, seidigen Glanz, größere Teilchen zu einem strahlenden Glanz)
- der Dicke der Titandioxidschicht (Interferenzfarbe)
- der Art des festen Reduktionsmittels (niedriges Reduktionspotential ergibt blauschwarz, hohes Reduktionspotential ergibt schwarz bis gelbschwarz) und
- der Menge des festen Reduktionsmittels.

Es ist weiterhin möglich, die Pigmente einer Nachbeschichtung zu unterziehen, die die Licht-, Wetter-, und chemische Stabilität weiter erhöht, oder die Handhabung des Pigments, insbesondere die Einarbeitung in unterschiedliche Medien, erleichtert. Als Nachbeschichtungen kommen beispielsweise die in den DE-PS 22 15 191, DE-OS- 31 51 354, DE-OS- 32 35 017 oder DE-OS- 33 34 598 beschriebenen Verfahren in Frage. Aufgrund der bereits ohne diese zusätzlichen Maßnahmen sehr guten Eigenschaften der erfindungsgemäßen Pigmente machen diese ggf. noch aufgebrachten Stoffe nur etwa 0 bis 5 Gew.-%, insbesondere etwa 0 bis 3 Gew.-%, des gesamten Pigments aus.

Das erfindungsgemäße Pigment zeichnet sich gegenüber den bisher bekannten Titandioxidreduktionspigmenten durch einen höheren Glanz und eine sehr gleichmäßige Dicke aus. Die als Dicktoleranz bezeichnete Standardabweichung ist nicht größer als 10 %. Durch die planparallele Oberfläche und die enge Dicktoleranz der Pigmentteilchen wird eine sehr große Farbreinheit und sehr hohe Farbstärke erreicht.

Die erfindungsgemäßen Pigmente sind mit einer Vielzahl von Farbsystemen kompatibel, vorzugsweise aus dem Bereich der Lacke, Farben, Druckfarben, Kunststoffe, Gläser und Keramiken.

Gegenstand der Erfindung ist somit auch die Verwendung der Reduktionspigmente allein oder in Kombination mit anderen Pigmenten, organischen oder anorganischen Farbstoffen und/oder Füllstoffen in Formulierungen wie Farben, Druckfarben, Lacke, Kunststoffe und Gläsern.

Gegenstand der Erfindung sind ebenfalls Pigmentmischungen enthaltend die erfindungsgemäßen Reduktionspigmente in Kombination mit handelsüblichen Pigmenten, wie z.B. anorganischen oder organischen Farbpigmenten, Effektpigmenten. Vorzugsweise enthalten die Pigmentgemische neben den Titanreduktionspigmenten alle dem Fachmann im Effektpigmentsektor gängigen Effektpigmente, z.B. wie Metalleffektpigmente aus Aluminium, Kupfer, Zink, Zinn und ihre Legierungen, wobei insbesondere Aluminium- und Goldbronzelegierungen bevorzugt zu nennen sind. Weiterhin bevorzugt enthalten die erfindungsgemäßen Pigmentgemische beschichtetes oder unbeschichtetes plättchenförmiges Eisenoxid, Aluminiumflakes oder beschichtete Aluminiumflakes. Derartige Effektpigmente werden von der BASF unter dem Namen Paliocrom®, von den Eckart-Werken unter dem Namen Standart® und von der Firma Flex vertrieben. Weiterhin zu nennen sind Perlglanzpigmente, BiOCl, funktionelle Pigmente, LCPs (Liquid Crystal Pigments), holographische Pigmente, mit ein oder mehreren Metalloxiden beschichtete Glas- oder Graphitplättchen und BiOCl.

Perlglanzpigmente, mit ein oder mehreren Metalloxiden beschichtete Glimmerschuppenpigmente, sind erhältlich z.B. von der Fa. Merck KGaA, Darmstadt unter dem Handelsnamen Iriodin®. Letztere sind z.B. bekannt aus den deutschen Patenten und Patentanmeldungen 14 67 468, 19 59 988, 20 09 566, 22 14 545, 22 15 191, 22 44 298, 23 13 331, 25 22 572, 31 37 808, 31 37 809, 31 51 343, 31 51 354, 31 51 355, 32 11 602 und 32 53 017. Insbesondere werden mit TiO₂ und/oder Fe₂O₃ beschichtete Glimmerpigmente eingesetzt. Als Schichtsilikat sind sowohl der natürliche als auch der synthetische Glimmer geeignet.

Die Titanreduktionspigmente können in jedem Verhältnis mit ein oder mehreren anorganischen oder organischen Pigmenten, Farbstoffen, Füllstoffen gemischt werden. Vorzugsweise beträgt das Verhältnis Titanreduktionspigment zu kommerziell erhältlichen Pigmenten bzw. Farbstoffen 10:1 bis 1:10.

Die erfindungsgemäße Pigmentmischung ist einfach und leicht handzuhaben. Die Pigmentmischung kann durch einfaches Einrühren in das Anwendungssystem eingearbeitet werden. Ein aufwendiges Mahlen und Dispergieren der Pigmente ist nicht erforderlich.

Die erfindungsgemäße Pigmentmischung kann zur Pigmentierung von Lacken, Druckfarben, Kunststoffen, Agrarfolien, Knopfpasten, Saatgutbeschichtung, Lebensmitteleinfärbung oder Arzneimittelüberzügen verwendet werden. Die Konzentration der Pigmentmischung im pigmentierenden Anwendungssystem liegt in der Regel zwischen 0,01 und 50 Gew.-%, bevorzugt zwischen 0,1 und 5 Gew.-%, bezogen auf den Gesamtfestkörpergehalt des Systems. Sie ist in der Regel abhängig vom konkreten Anwendungsfall.

Kunststoffe enthaltend das erfindungsgemäße Pigmentgemisch bestehend aus Titanreduktionspigment und Effekt- und/oder Perlglanzpigment in Mengen von 0,1 bis 50 Gew.-%, insbesondere 0,5 bis 7 Gew.-%, zeichnen sich häufig durch einen besonderen Sparkle-Effekt aus.

Im Lackbereich, insbesondere im Automobillack, wird das Pigmentgemisch bestehend aus Titanreduktionspigment und Effekt- und/oder Perlglanzpigment in Mengen von 0,5 bis 10 Gew.-% eingesetzt. Im Lack hat die erfindungsgemäße Pigmentmischung den Vorteil, daß der angestrebte Farbflop-Effekt durch eine einschichtige Lackierung (Einschichtsysteme bzw. als Basecoat im 2-Schichtaufbau) erzielt wird. Dieser Farbflop ist auch im diffusen Licht sehr deutlich ausgeprägt.

Bei der Pigmentierung von Bindemittelsystemen, z. B. für Farben und Druckfarben für den Tiefendruck, Offsetdruck oder Siebdruck, haben sich insbesondere Pigmentgemische bestehend aus Titanreduktionspigment und Effekt- und/oder Perlglanzpigment und/oder Aluminium- und Goldbronzepasten der Fa. Eckart-Werke als besonders geeignet erwiesen. Das Pigmentgemisch wird in die Druckfarbe in Mengen von 2-50 Gew.-%, vorzugsweise 5- 30 Gew.-%, und insbesondere 8-15 Gew.-%, eingearbeitet. Die Druckfarben enthaltend das erfindungsgemäße Pigmentgemisch zeigen sehr reine Farbtöne und sind aufgrund der niedrigen Werte für die Viskosität gut verdruckbar.

Gegenstand der Erfindung sind ebenfalls Pigmentpräparate enthaltend die Titanreduktionspigmente allein oder in Kombination mit organischen oder anorganischen Pigmenten, Farbstoffen, Bindemitteln und gegebenenfalls Additiven, die in Form eines weitgehend lösungsmittelfreien, rieselfähigen Granulats vorliegen. Derartige Granulate enthalten bis zu 95 Gew.-% des Titanreduktionspigments. Eine Pigmentzubereitung, bei der das erfindungsgemäße Pigmentgemisch mit einem Bindemittel und mit Wasser und/oder einem organischen Lösemittel und gegebenenfalls Additiven angepastet wird, und die Paste nachfolgend getrocknet und in eine kompakte Teilchenform, z. B. Granulate, Pellets, Briketts, Masterbatch, Tabletten, gebracht wird, ist insbesondere als Vorprodukt für Druckfarben geeignet.

Gegenstand der Erfindung sind somit auch Pigmentpräparate enthaltend das erfindungsgemäße Titanreduktionspigment.

Die im folgenden angegebenen Beispiele sollen die Erfindung erläutern ohne sie zu begrenzen.

### Beispiele

### Beispiel 1

100g TiO₂ beschichtete SiO₂-Plättchen der Teilchengröße 5-40 µm der Fa. Merck KGaA werden mit 0,76 g Silizium-Pulver, 0,5 g CaCl₂ (wasserfrei) und 1 g Talkum gemischt und gut homogenisiert. Anschließend wird das Pigmentgemisch in einem N₂-Strom 0,5 h bei 900 °C geglüht. Das Produkt weist eine dunkle Körperfarbe auf. Die Interferenzfarbe wechselt von rotlila (steiler Blickwinkel) zu blau-grün (flacher Blickwinkel).

### Beispiel 2

| | | |
|---|---|---|
| Farbe | 1,5 % | Titansuboxid beschichtete SiO₂-Plättchen der Teilchengröße 5-40 µm hergestellt nach Beispiel 1 |
| | 1,0 % | Eisenoxid-Orange |
| | 0,7 % | Chromtitan P.Br. 24/77310 |
| | 0,7 % | Graphitan 7525 (Fa. Ciba) |
| | 0,5 % | Eisenoxid P4 42/77492 |
| | 0,4 % | micronisiertes TiO₂, 35 nm |
| | Pigment : | Bindemittel 38/100 |

Man erhält einen oliven Grundton mit silberblauen Highlights, wobei die Lackierung eine Variation im Downflop nach grün aufweist.

### Vergleichsbeispiel:

| | | |
|---|---|---|
| Farbe | 1,5 % | Iriodin® 9605 SW (Titansuboxid beschichtetes Glimmerpigment der Teilchengröße 10-40 µm der Fa. Merck KGaA) |
| | 1,0 % | Eisenoxid-Orange |
| | 0,7 % | Chromtitan P.Br. 24/77310 |
| | 0,7 % | Graphitan 7525 |
| | 0,5 % | Eisenoxid P4 42/77492 |
| | 0,4 % | micronisiertes TiO₂, 35 nm |
| | Pigment : | Bindemittel 38/100 |

Man erhält ausschließlich einen oliven Grundton mit silberblauen Highlights.

### Beispiel 3:

| | | |
|---|---|---|
| Farbe | 3,0 % | Titansuboxid beschichtete SiO₂-Plättchen gemäß Beispiel 1 |
| | 0,7 % | Graphitan 7525 |
| | 0,5 % | Phthalocyaninblau PB 15:1 / 74160 |
| | 0,3 % | Gasruß P.BK. 7/77266 |

Man erhält als Grundton ein mittleres Stahlblau mit silberblauen Highlights, welches einen Downflop nach grünlich aufweist.

### Vergleichsbeispiel:

| | | |
|---|---|---|
| Farbe | 3,0 % | Titandioxid beschichtete SiO₂-Plättchen |
| | 0,7 % | Graphitan 7525 |
| | 0,03 % | Phthalocyaninblau PB 15:1 / 74160 |
| | 0,03 % | Gasruß P.BK. 7/77266 |

Man erhält als Grundton ein mittleres Stahlblau, welches einen Downflop nach grünlich aufweist. Die Lackierung ist gegenüber Beispiel 3 deutlich transparenter.

## Patentansprüche

1. Reduktionspigmente auf Basis von SiO₂-Plättchen, die mit Titandioxid, ein oder mehreren Titansuboxiden und gegebenenfalls mit mindestens einem Metalloxid, Nichtmetalloxid und/oder Titanoxinitrid beschichtet sind, hergestellt indem mit Titandioxid und gegebenenfalls mit mindestens einem weiteren Metalloxid beschichtete SiO₂-Plättchen mit einem festen Reduktionsmittel in Form von Metallpulvern, Legierungen von Metallen, Metallboriden, Metallcarbiden oder Metallsilisiden reduziert werden.

2. Reduktionspigmente nach Anspruch 1, **dadurch gekennzeichnet, daß** es sich bei den anderen Metalloxiden und/oder Nichtmetalloxiden um Oxide der Elemente Li, Na, K, Mg, Ca, B, Al, Si, Cr, Zr, Zn und Fe handelt.

3. Reduktionspigmente nach Anspruch 2, **dadurch gekennzeichnet, daß** das andere Metalloxid und/oder Nichtmetalloxid in einer Menge von 2 bis 30 Gew.-% bezogen auf die Titandioxidmenge im Pigment vorliegt.

4. Verfahren zur Herstellung von Reduktionspigmenten nach Anspruch 1, **dadurch gekennzeichnet, daß** man mit TiO₂ und gegebenenfalls mindestens einem weiteren Metalloxid beschichtete SiO₂-Plättchen in einem Verhältnis von 100:1 bis 5:1 mit mindestens einem festen Reduktionsmittel mischt, und daß man die Mischungen in einer nichtoxidierenden Gasatmosphäre bei einer Temperatur von mehr als 600 °C calciniert.

5. Verfahren nach Anspruch 4, **dadurch gekennzeichnet, daß** das Reduktionsmittel ein Erdalkalimetall, B, Al, Si, Zn, Fe, LiH, CaH₂, Al₄C₃, Mg₂Si, MgSi₂, Ca₂Si oder CaSi₂ ist.

6. Verfahren nach den Ansprüchen 4 und 5, **dadurch gekennzeichnet, daß** man die mit TiO₂ und gegebenenfalls mindestens einem weiteren Metalloxid beschichteten SiO₂-Plättchen mit einem Halogenid in einer Menge von 0,1 bis 40 Gew.-% mischt.

7. Verfahren nach Anspruch 6, **dadurch gekennzeichnet, daß** es sich bei dem Halogenid bevorzugt um LiCl, NaCl, KCl, MgCl₂, CaCl₂, CuCl₂, CrCl₃, MnCl₂, FeCl₂, FeCl₃, CoCl₂, NiCl₂ oder CeCl₃ handelt.

8. Verwendung der Reduktionspigmente gemäß Anspruch 1 allein oder in Kombination mit handelsüblichen Pigmenten in Farben, Lacken, Druckfarben, Kunststoffen, und in Glasuren für Keramiken und Gläser.

9. Formulierungen, die ein Reduktionspigment nach Anspruch 1 enthalten.

10. Trockenpräparate, die ein Reduktionspigment nach Anspruch 1 enthalten.

## Claims

1. Reduction pigments based on SiO₂ flakes which are coated with titanium dioxide, one or more titanium suboxides and optionally with at least one metal oxide, non-metal oxide and/or titanium oxynitride, prepared by reducing SiO₂ flakes coated with titanium dioxide and optionally with at least one further metal oxide using a solid reducing agent in the form of metal powders, alloys of metals, metal borides, metal carbides or metal silicides.

2. Reduction pigments according to Claim 1, **characterised in that** the other metal oxides and/or non-metal oxides are oxides of the elements Li, Na, K, Mg, Ca, B, Al, Si, Cr, Zr, Zn and Fe.

3. Reduction pigments according to Claim 2, **characterised in that** the other metal oxide and/or non-metal oxide is present in the pigment in an amount of from 2 to 30% by weight, based on the amount of titanium dioxide.

4. Process for the preparation of reduction pigments according to Claim 1, **characterised in that** SiO₂ flakes coated with TiO₂ and optionally at least one further metal oxide are mixed with at least one solid reducing agent in a ratio of 100:1 to 5:1, and **in that** the mixtures are calcined in a non-oxidising gas atmosphere at a temperature of more than 600°C.

5. Process according to Claim 4, **characterised in that** the reducing agent is an alkaline earth metal, B, Al, Si, Zn, Fe, LiH, CaH₂, Al₄C₃, Mg₂Si, MgSi₂, Ca₂Si or CaSi₂.

6. Process according to Claims 4 and 5, **characterised in that** the SiO₂ flakes coated with TiO₂ and optionally at least one further metal oxide are mixed with a halide in an amount of 0.1 to 40% by weight.

7. Process according to Claim 6, **characterised in that** the halide is preferably LiCl, NaCl, KCl, MgCl₂, CaCl₂, CuCl₂, CrCl₃, MnCl₂, FeCl₂, FeCl₃, CoCl₂, NiCl₂ or CeCl₃.

8. Use of the reduction pigments according to Claim 1 alone or in combination with commercially available pigments in paints, surface coatings, printing inks, plastics and in glazes for ceramics and glasses.

9. Formulations which comprise a reduction pigment according to Claim 1.

10. Dry preparations which comprise a reduction pigment according to Claim 1.

## Revendications

1. Pigments de réduction basés sur flocons de SiO₂ qui sont revêtus avec du dioxyde de titane, avec un ou plusieurs sous-oxydes de titane et optionnellement avec au moins un oxyde métallique, un oxyde non métallique et/ou un oxynitrure de titane, préparés en réduisant des flocons de SiO₂ revêtus avec du dioxyde de titane et optionnellement avec au moins un oxyde métallique supplémentaire en utilisant un agent réducteur solide sous la forme de poudres métalliques, d'alliages de métaux, de borures métalliques, de carbures métalliques ou de siliciures métalliques.

2. Pigments de réduction selon la revendication 1, **caractérisés en ce que** les autres oxydes métalliques et/ou oxydes non métalliques sont des oxydes des éléments Li, Na, K, Mg, Ca, B, Al, Si, Cr, Zr, Zn et Fe.

3. Pigments de réduction selon la revendication 2, **caractérisés en ce que** l'autre oxyde métallique et/ou oxyde non métallique est présent dans le pigment selon une quantité de 2 à 30% en poids, sur la base de la quantité de dioxyde de titane.

4. Procédé pour la préparation de pigments de réduction selon la revendication 1, **caractérisé en ce que** des flocons de SiO₂ qui sont revêtus avec TiO₂ et optionnellement avec au moins un oxyde métallique supplémentaire sont mélangés avec au moins un agent réducteur solide selon le rapport de 100:1 à 5:1, et **en ce que** les mélanges sont calcinés dans une atmosphère gazeuse non oxydante à une température supérieure à 600°C.

5. Procédé selon la revendication 4, **caractérisé en ce que** l'agent réducteur est un métal alcalino-terreux, B, Al, Si, Zn, Fe, LiH, CaH₂, Al₄C₃, Mg₂Si, MgSi₂, Ca₂Si ou CaSi₂.

6. Procédé selon les revendications 4 et 5, **caractérisé en ce que** les flocons de SiO₂ revêtus avec TiO₂ et optionnellement avec au moins un oxyde métallique supplémentaire sont mélangés avec un halogénure selon une quantité de 0,1 à 40% en poids.

7. Procédé selon la revendication 6, **caractérisé en ce que** l'halogénure est de préférence LiCl, NaCl, KCI, MgCl₂, CaCl₂, CuCl₂, CrCl₃, MnCl₂, FeCl₂, FeCl₃, CoCl₂, NiCl₂ ou CeCl₃.

8. Utilisation de pigments de réduction selon la revendication 1 seuls ou en combinaison avec des pigments disponibles commercialement dans des peintures, des revêtements de surface, des encres d'impression, des plastiques et dans des émaux pour des céramiques et des verres.

9. Formulations qui comprennent un pigment de réduction selon la revendication 1.

10. Préparations sèches qui comprennent un pigment de réduction selon la revendication 1.
